# EUROPÄISCHE PATENTSCHRIFT

(11) **EP 0 852 681 B1**
(45) Veröffentlichungstag und Bekanntmachung des Hinweises auf die Patenterteilung: **14.06.2000**
(21) Anmeldenummer: 96930958.2
(22) Anmeldetag: 13.09.1996
(51) Int. Cl.: F16L 9/18

(54) **HYDRAULISCHER KREISLAUF MIT INTEGRIERTEM DRUCKLOSEN RÜCKLAUF**
HYDRAULIC CIRCUIT WITH INTEGRATED UNPRESSURIZED RETURN FLOW
CIRCUIT HYDRAULIQUE A RETOUR INTEGRE SANS PRESSION

(30) Priorität: 28.09.1995 DE 19536219
(43) Veröffentlichungstag der Anmeldung: 15.07.1998
(73) Patentinhaber: SIEMENS AKTIENGESELLSCHAFT, 80333 München (DE)
(72) Erfinder: WAGNER, Heinz-Hermann, D-45479 Mülheim (DE)
(86) Internationale Anmeldenummer: DE9601731
(87) Internationale Veröffentlichungsnummer: WO9712165

(56) Entgegenhaltungen:
- EP-A- 0 072 372
- EP-A- 0 207 015
- DE-A- 3 335 580
- FR-A- 2 341 094
- US-A- 4 932 257

## Beschreibung

Die Erfindung bezieht sich auf einen hydraulischen Kreislauf.

In der DE 37 39 937 A1 ist eine Kraftstoffdruckleitung mit einem Druckrohr, mit einem dieses mit engem Spiel umgebenen Mantelrohr sowie mit zwischen beiden Rohren in Längsrichtung verlaufenden Leckkraftstoffkanälen beschrieben. Das einstükkig aus Vollmaterial hergestellte Druckrohr weist an seiner äußeren Mantelfläche mindestens eine Abflachung zur Bildung von kreissegmentförmigen Leckkraftstoffkanälen auf. Eine derartige Kraftstoffdruckleitung soll einfach herstellbar und auch in Biegungen eine größtmögliche Formstabilität und somit Haltbarkeit aufweisen, um die Gefahr eines Einreißens des Druckrohrs zu verringern.

Es sind Regeleinrichtungen bekannt, die hydraulisch betrieben werden. Solche hydraulischen Regeleinrichtungen können mit hohen Drücken betrieben werden. Der Druck in einer Zuleitungen kann z.B. bis zu 140 bar betragen, wobei der Innendurchmesser der Zuleitung relativ klein gewählt werden kann. Der hohe Arbeitsdruck innerhalb der Hydraulikleitungen erfordert an den Kopplungsstellen oder Flanschverbindungen besondere Maßnahmen hinsichtlich der Abdichtung. Leckagen würden zu unerwünschtem Druckverlust und zu einer Kontamination der Umgebung führen. Bei Regeleinrichtungen für Turbomaschinen, insbesondere Industrieturbinen und Turbogeneratoren, besteht weiterhin die Gefahr eines Brandes, wenn es sich bei der Hydraulikflüssigkeit um ein brennbares Fluid handelt.

Es ist bekannt, zur Vermeidung von unerwünschten Folgeerscheinungen eventueller Ölleckagen, wie dem Austreten von Lecköl und der Gefahr von Bränden, eine druckführende Innenleitung mit einem hydraulisch dichten, berstsicheren Mantel zu umgeben. Ein solcher Vorschlag ist z.B. in der DE 33 35 580 A1 beschrieben.

Dadurch, daß die Innenleitung in einem gewissen Abstand mit einem Mantel versehen ist, erhöht sich das notwendige Einbauvolumen für eine solche Leitung. Neben einer drucktragenden Zuleitung wird bei einer Steuer- oder Regeleinrichtung auch eine Rückleitung benötigt, die einen Rücklauf für die Hydraulikflüssigkeit bildet, da die hydraulische Flüssigkeit im Kreislauf geführt werden soll. Dies vergrößert den Raumbedarf für die Leitungen von Steuer- und Regeleinrichtungen.

Der vorliegenden Erfindung liegt die Aufgabe zugrunde, einen hydraul. Kreislauf mit geringem Raumbedarf und mit hoher Sicherheit anzugeben.

Diese Aufgabe wird erfindungsgemäß durch einen hydraul. Kreislauf mit den Merkmalen des Anspruchs 1 gelöst. Vorteilhafte Weiterbildungen sind Gegenstand der Unteransprüche.

Die Fluidleitung, die wenigstens eine von einem hydraulisch dichten, berstsicheren Mantel umgebene, durch Innendruck belastbare Innenleitung umfaßt, zeichnet sich dadurch aus, daß der Raum zwischen der Innenleitung und dem Mantel eine drucklose Außenleitung bildet. Durch diese Ausbildung wird ein hydraul. Kreislauf bereitgestellt, bei der die Außenleitung einen integrierten Rücklauf für eine Hydraulikflüssigkeit darstellt. Somit bedarf es keiner gesonderten zusätzlichen Rücklaufleitung, da die zwei Leitungen, nämlich die erste druckführende Innenleitung und die zweite drucklose Außenleitung, zu einer einzigen Fluidleitung integriert sind. Durch die Bezeichnung drucklose Außenleitung soll auch zum Ausdruck gebracht werden, daß der Druck der Hydraulikflüssigkeit in der Außenleitung gegenüber dem Druck der Hydraulikflüssigkeit in der druckführenden Innenleitung wesentlich kleiner sein kann. Die drucklose Außenleitung kann ohne wesentliche dazwischenliegende Drosselelemente mit einem Vorratsbehälter in Verbindung stehen, so daß sich darin auch bei Zufuhr größerer Mengen Fluid kein wesentlicher Druck aufbauen kann. Beim Bersten der Innenleitung wird die Hydraulikflüssigkeit von der Außenleitung aufgenommen, wodurch eine Druckreduktion in der Innenleitung stattfindet und die aus der Innenleitung austretende Hydraulikflüssigkeit zu dem Vorratsbehälter geführt wird.

Zur Ankopplung der Fluidleitung, z.B. an eine Druckpumpe, weist sie wenigstens an einem Ende eine Kupplung auf, die wenigstens einen Druckkanal umfaßt, der mit der Innenleitung verbunden ist, und die wenigstens einen Kanal, der mit der Außenleitung verbunden ist, besitzt. Eine solche Kupplung kann auch zur Verbindung zweier Fluidleitungen dienen, die gleich aufgebaut sind.

Vorzugsweise ist der Druckkanal in der Kupplung koaxial, insbesondere konzentrisch, zu der Innenleitung ausgebildet. Hierdurch werden Schwierigkeiten beim Verbinden der Kupplung mit einer weiteren Kupplung oder der Kupplung mit z.B. einer Versorgungseinrichtung vermieden. Bevorzugt ist eine Ausführung, bei der die Kupplung im wesentlichen aus übereinander liegenden Platten gebildet ist, in die der Druckkanal und der mit der Innenleitung verbindbare Kanal vor dem Zusammenbau eingearbeitet wurden.

Vorzugsweise wird der hydraulische Kreislauf in einer hydraulischen Regeleinrichtungen eine Maschine, insbesondere für Stellantriebe einer Turbomaschine, insbesondere einer Industrieturbine, verwendet. Dabei verbinden die Innenleitung als druckführende Zuleitung einerseits und die Außenleitung als drucklose Außenleitung andererseits Komponenten einer hydraulischen Versorgungseinheit untereinander oder eine Versorgungseinrichtung mit wenigstens einer Ansteuereinheit (Stellantrieb) der Maschine.

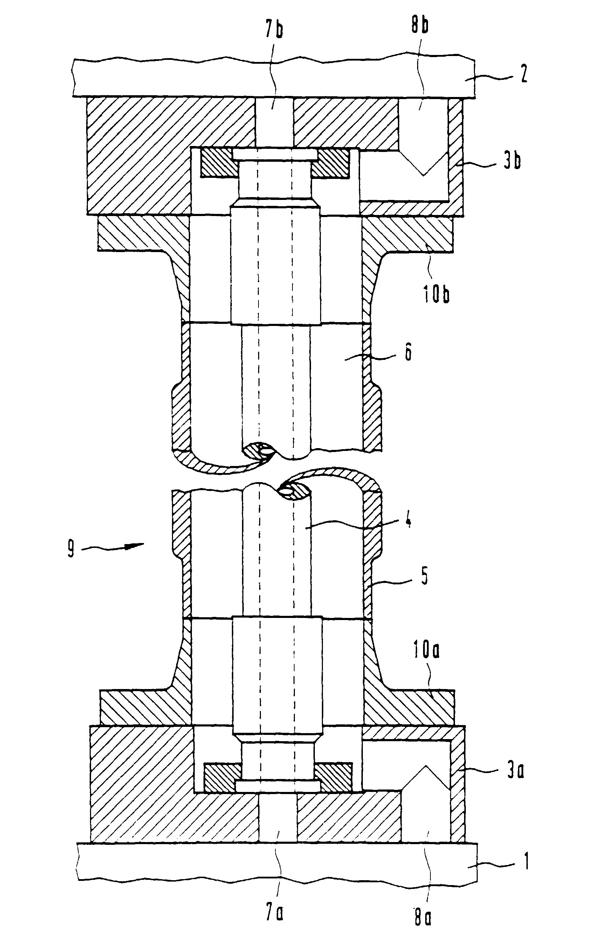

Weitere Vorteile des hydraulischen Kreislaufs werden anhand eines in der Zeichnung dargestellten bevorzugten Ausführungsbeispiels erläutert.

Zwischen einer Versorgungseinrichtung 1 und einem Stellantrieb 2, welche nur schematisch in der Zeichnung angedeutet sind, ist eine Fluidleitung 9 angeordnet. Die Fluidleitung 9 umfaßt eine von einem hydraulisch dichten, berstsicheren Mantel 5 umgebene Innenleitung 4. Die Innenleitung 4 und der Mantel 5 sind im Querschnitt im wesentlichen kreisförmig ausgebildet und konzentrisch zueinander angeordnet. Der im Querschnitt ringförmige Raum zwischen der Innenleitung 4 und dem Mantel 5 bildet eine drucklose Außenleitung 6. An jedem Ende der Leitung 9 ist jeweils eine Kupplung 3a, 3b vorgesehen, die an einer Seite über jeweils einen Flansch 10a, 10b mit dem Mantel 5 verbunden ist. Die Verbindung der Flansche 10a, 10b mit der Kupplung 3a, 3b kann über nicht dargestellte Schraubverbindungen erfolgen. Jede Kupplung 3a, 3b weist zentral einen Druckkanal 7a, 7b auf, der hydraulisch dicht mit der Innenleitung 4 verbunden ist. Der Druckkanal 7a, 7b ist koaxial zu der Innenleitung 4 ausgebildet. Die Außenleitung 6 ist mit einem in der Kupplung 3a, 3b ausgebildeten Kanal 8a, 8b verbunden.

Die unter Druck stehende Hydraulikflüssigkeit, z. B. Drucköl, strömt von der Versorgungseinrichtung 1 über den Druckkanal 7a in der Kupplung 3a in die Innenleitung 4. Aus der Innenleitung 4 strömt die Hydraulikflüssigkeit über den Druckkanal 7b in der Kupplung 3b zu dem Stellantrieb 2. Bei dem Stellantrieb 2 kann es sich um einen Stellantrieb handeln, welcher zur Betätigung von Ventilen in einer Turbine verwendet wird. Die weitgehend drucklose Hydraulikflüssigkeit strömt zurück von dem Stellantrieb 2 über den Kanal 8b in der Kupplung 3 in die Außenleitung 6. Die Hydraulikflüssigkeit verläßt die Außenleitung 6 über den Kanal 8a in der Kupplung 3a und strömt in die Versorgungseinrichtung 1 zurück. Die zurückströmende Hydraulikflüssigkeit kann z. B. in einen nicht dargestellten Vorratsbehälter der Versorgungseinrichtung 1 einströmen.

## Patentansprüche

1. Hydraulischer Kreislauf mit einer Fluidleitung (9), die eine von einem hydraulisch dichten, berstsicheren Mantel (5) umgebene durch Innendruck belastbare Innenleitung (4) als Zulaufleitung umfaßt, wobei der Raum zwischen der Innenleitung (4) und dem Mantel (5) eine drucklose Außenleitung (6) bildet, die als Rücklaufleitung dient.

2. Hydraulischer Kreislauf nach Anspruch 1, gekennzeichnet durch wenigstens eine an einem Ende angeordnete Kupplung (3a, 3b) mit wenigstens einem Druckkanal (7a, 7b), der mit der Innenleitung (4) verbunden ist, und mit wenigstens einem Kanal (8a, 8b), der mit der Außenleitung (6) verbunden ist.

3. Hydraulischer Kreislauf nach Anspruch 2, **dadurch gekennzeichnet**, daß der Druckkanal (7a, 7b) koaxial, vorzugsweise konzentrisch, zu der Innenleitung (4) ausgebildet ist.

4. Hydraulischer Kreislauf nach Anspruch 2 oder 3, **dadurch gekennzeichnet**, daß die Kupplung (3a, 3b) aus übereinander liegenden Platten ausgebildet ist, in die der Druckkanal (7a, 7b) und der Kanal (8a, 8b) eingearbeitet sind.

5. Verwendung eines hydraulischen Kreislaufs (9) nach einem der Ansprüche 1 bis 4, in einer Regeleinrichtung einer Maschine, insbesondere mit einem Stellantrieb einer Turbomaschine, wobei die Innenleitung (4) als druckführende Zuleitung und die Außenleitung (6) als drucklose Rückleitung Komponenten einer hydraulischen Versorgungseinrichtung (1) untereinander und/oder eine Versorgungseinrichtung (1) mit wenigstens einem Stellantrieb (2) verbinden.

## Claims

1. Hydraulic circuit having a fluid conduit (9) which comprises an inner conduit (4), which is surrounded by a hydraulically leaktight, burst-proof jacket (5) and can be subjected to internal pressure, as a feed conduit, the space between the inner conduit (4) and the jacket (5) forming an unpressurized outer conduit (6) which serves as a return conduit.

2. Hydraulic circuit according to Claim 1, characterized by at least one coupling (3a, 3b) arranged at one end and having at least one pressure passage (7a, 7b), which is connected to the inner conduit (4), and having at least one passage (8a, 8b), which is connected to the outer conduit (6).

3. Hydraulic circuit according to Claim 2, characterized in that the pressure passage (7a, 7b) is formed coaxially, preferably concentrically, with respect to the inner conduit (4).

4. Hydraulic circuit according to Claim 2 or 3, characterized in that the coupling (3a, 3b) is formed from plates which lie one on top of the other and into which the pressure passage (7a, 7b) and the passage (8a, 8b) are machined.

5. Use of a hydraulic circuit according to one of Claims 1 to 4, in a regulating device of a machine, in particular with an actuator of a turbo machine, the inner conduit (4), as a pressure-transmitting feed conduit, and the outer conduit (6), as an unpressurized return conduit, connecting components of a hydraulic supply device (1) to one another and/or a supply device (1) to at least one actuator (2).

## Revendications

1. Circuit hydraulique comportant une conduite (9) de fluide, qui comprend comme conduite d'amenée une conduite (4) intérieure qui est étanche du point de vue hydraulique, qui est entourée d'une enveloppe (5) résistant à l'éclatement et qui peut être soumise à une pression intérieure, l'intervalle entre la conduite (4) intérieure et l'enveloppe (5) formant une conduite (6) extérieure sans pression qui sert de conduite de retour.

2. Circuit hydraulique suivant la revendication 1, caractérisé par au moins un accouplement (3a, 3b) monté à une extrémité, comportant une canalisation (7a, 7b) sous pression qui communique avec la conduite (4) intérieure et comportant au moins une- canalisation (8a, 8b) qui communique avec la conduite (6) extérieure.

3. Circuit hydraulique suivant la revendication 2, caractérisé en ce que la canalisation (7a, 7b) sous pression est réalisée coaxialement, de préférence concentriquement, à la conduite (4) intérieure.

4. Circuit hydraulique suivant la revendication 2 ou 3, caractérisé en ce que l'accouplement (3a, 3b) est constitué de plaques superposées dans lesquelles la canalisation (7a, 7b) sous pression et la canalisation (8a, 8b) sont usinées.

5. Utilisation d'un circuit hydraulique suivant l'une des revendications 1 à 4 dans un dispositif de régulation d'une machine, notamment comportant un vérin d'une turbomachine, la conduite (4) intérieure servant de conduite d'amenée guidant la pression et la conduite (6) extérieure servant de conduite de retour sans pression faisant communiquer entre eux des éléments d'un dispositif (1) d'alimentation hydraulique et/ou faisant communiquer un dispositif (1) d'alimentation avec au moins un vérin (2).
